(19) Europäisches Patentamt / European Patent Office / Office européen des brevets

(11) **EP 4 383 819 A1**

(12) **EUROPEAN PATENT APPLICATION**
published in accordance with Art. 153(4) EPC

(43) Date of publication:
**12.06.2024 Bulletin 2024/24**

(21) Application number: **21952375.0**

(22) Date of filing: **06.08.2021**

(51) International Patent Classification (IPC):
**H04W 36/08** (2009.01)  **H04W 36/30** (2009.01)
**H04W 36/32** (2009.01)

(52) Cooperative Patent Classification (CPC):
**H04W 36/302; H04W 36/083**

(86) International application number:
**PCT/CN2021/111088**

(87) International publication number:
**WO 2023/010498 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Xiaolong**
**Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **RESELECTION TIME DETERMINATION METHOD AND APPARATUS FOR ASSISTING CELL RESELECTION, AND COMMUNICATION DEVICE**

(57) The present disclosure belongs to the technical field of wireless communications, and provides a reselection time determination method and apparatus for assisting cell reselection, and a communication device. The method comprises: the user equipment (UE) receives time information for assisting the UE with cell reselection sent by a network side device, determines reselection time according to the time information, and measures neighboring cells at the reselection time so as to carry out cell reselection. In the embodiments of the present disclosure, the specific content of the time information for assisting the UE with cell reselection is determined, so that the UE determines the reselection time according to the time information, thereby improving the reliability of cell reselection, and avoiding the disconnection of communication links.

receiving timing information transmitted by a network side device for assisting the UE in the cell reselection and determining the reselection timing according to the timing information — 101

performing a neighboring cell measurement at the reselection timing to perform the cell reselection — 102

FIG. 1

## Description

## TECHNICAL FIELD

The disclosure relates to the field of wireless communication technologies, and more particularly, to a method and an apparatus for determining reselection timing for assisting in a cell reselection, and a communication device.

## BACKGROUND

At present, the 5th generation mobile communication technology (5G) has introduced non-terrestrial networks (NTN), i.e., satellite networks. Each satellite corresponds to a signal coverage area, i.e., a "cell". When the satellite performs a feeder link switch or a service link switch, it may cause user equipments (UEs) in the cell to perform cell reselection. In satellite communication, cell reselection refers to a process in which the UE reselects, from one satellite that communicates with ground devices, to another satellite that communicates with ground devices, or reselects, from one cell, to another cell, so as to be located within a network coverage. If reselection timing determined for the cell reselection is incorrect, a transmission link may be disconnected.

Therefore, during the cell reselection, determining the reselection timing for assisting in the cell reselection is a technical problem to be solved urgently.

## SUMMARY

A method and an apparatus for determining reselection timing for assisting in a cell reselection, and a communication device, according to the disclosure, are used to determine the reselection timing for assisting in the cell reselection to avoid no network coverage.

According to an aspect of embodiments of the disclosure, a method for determining reselection timing for assisting in a cell reselection is provided. The method is performed by a UE. The method includes: receiving timing information transmitted by a network side device for assisting the UE in the cell reselection and determining the reselection timing according to the timing information; and performing a neighboring cell measurement at the reselection timing to perform the cell reselection.

According to another aspect of embodiments of the disclosure, a method for determining reselection timing for assisting in a cell reselection is provided. The method is performed by a network side device. The method includes: transmitting timing information for assisting a UE in the cell reselection to the UE; in which the timing information is configured for the UE to determine the reselection timing and perform the cell reselection according to the reselection timing.

According to another aspect of embodiments of the disclosure, an apparatus for determining reselection timing for assisting in a cell reselection is provided. The apparatus includes: a receiving module, configured to receive timing information transmitted by a network side device for assisting the UE in the cell reselection; a processing module, configured to determine the reselection timing according to the timing information; and a determining module, configured to perform a neighboring cell measurement at the reselection timing to perform the cell reselection.

According to another aspect of embodiments of the disclosure, an apparatus for determining reselection timing for assisting in a cell reselection is provided. The apparatus includes: a transmitting module, configured to transmit timing information for assisting a UE in the cell reselection to the UE; in which the timing information is configured for the UE to determine the reselection timing and perform the cell reselection according to the reselection timing.

According to another aspect of embodiments of the disclosure, a communication device is provided. The device includes: a transceiver; a memory; and a processor, connected to the transceiver and the memory respectively, configured to control transmissions and receptions of wireless signals of the transceiver and realize the above-mentioned methods by executing computer-executable instructions on the memory.

According to another aspect of embodiments of the disclosure, a computer storage medium is provided. The computer storage medium stores computer-executable instructions; and when the computer-executable instructions are executed by a processor, the above-mentioned methods are performed.

According to another aspect of embodiments of the disclosure, a computer program product is provided. The computer program product includes a computer program, and the computer program performs the above-mentioned methods when executed by a processor.

The technical solutions according to the embodiments of the disclosure include the following beneficial effects. The UE receives the timing information transmitted by the network side device for assisting the UE in the cell reselection, determines the reselection timing according to the timing information, and performs the neighboring cell measurement at the reselection timing to perform the cell reselection. The specific content of the timing information used to assist the UE in the cell reselection is determined according to the embodiments of the disclosure, which facilitates the UE to determine the reselection timing according to the timing information, improves the reliability of the cell reselection, and avoids no network coverage.

Additional aspects and advantages of the disclosure will be given in part in the following descriptions, become apparent in part from the following descriptions, or be learned from the practice of the disclosure.

## BRIEF DESCRIPTION OF THE DRAWINGS

The above and/or additional aspects and advantages of the disclosure will become apparent and understandable from the following descriptions according to embodiments made with reference to the accompanying drawings, in which:

FIG. 1 is a schematic flowchart of a method for determining reselection timing for assisting in a cell reselection according to embodiments of the disclosure.

FIG. 2 is a schematic flowchart of another method for determining reselection timing for assisting in a cell reselection according to embodiments of the disclosure.

FIG. 3 is a schematic flowchart of another method for determining timing for assisting in a cell reselection according to embodiments of the disclosure.

FIG. 4 is a schematic flowchart of another method for determining timing for assisting in a cell reselection according to embodiments of the disclosure.

FIG. 5 is a schematic flowchart of another method for determining timing for assisting in a cell reselection according to embodiments of the disclosure.

FIG. 6 is a schematic flowchart of another method for determining reselection timing for assisting in a cell reselection according to embodiments of the disclosure.

FIG. 7 is a schematic block diagram of an apparatus for determining reselection timing for assisting in a cell reselection according to embodiments of the disclosure.

FIG. 8 is a schematic block diagram of another apparatus for determining reselection timing for assisting in a cell reselection according to embodiments of the disclosure.

FIG. 9 is a block diagram of a UE according to embodiments of the disclosure.

FIG. 10 is a block diagram of a network side device according to embodiments of the disclosure.

## DETAILED DESCRIPTION

Reference will now be made in detail to embodiments, examples of which are illustrated in the accompanying drawings. The following descriptions refer to the accompanying drawings in which the same numbers in different drawings represent the same or similar elements unless otherwise represented. The implementations set forth in the following descriptions according to embodiments do not represent all implementations consistent with the disclosure. Instead, they are merely examples of apparatuses and methods consistent with aspects related to the disclosure as recited in the appended claims.

Terms used according to embodiments of the disclosure are merely for describing specific examples and are not intended to limit the disclosure. The singular forms "a", and "the" used in the disclosure and the appended claims are also intended to include a multiple form, unless other meanings are clearly represented in the context. It should also be understood that the term "and/or" used in the disclosure refers to any or all of possible combinations including one or more associated listed items.

It should be understood that although the terms first, second, and third may be used according to embodiments of the disclosure to describe various information, the information should not be limited to these terms. These terms are only used to distinguish information of the same type from one another. For example, without departing from the scope according to the embodiments of the disclosure, first information may also be called second information, and similarly, second information may also be called first information. Depending on the context, the words "if" and "if" as used herein may be interpreted as "at" or "when" or "in response to a determination."

Embodiments of the disclosure are described in detail below. Examples of the embodiments are illustrated in the accompanying drawings where the same or similar numbers throughout indicate the same or similar elements. The embodiments described below by reference to the accompanying drawings are illustrative and are intended to interpret the disclosure and are not to be construed as a limitation of the disclosure.

A method and an apparatus for determining reselection timing for assisting in a cell reselection, and a communication device according to the disclosure will be described in detail below with reference to the accompanying drawings.

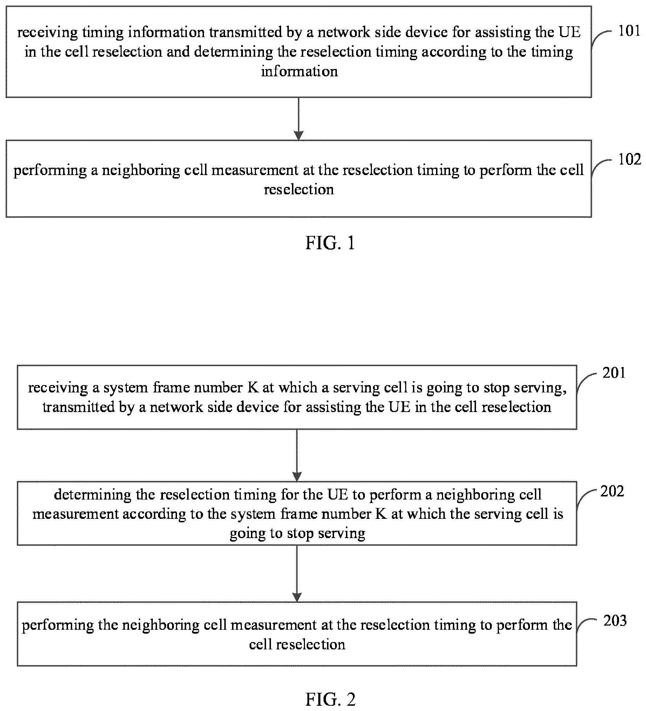

FIG. 1 is a schematic flowchart of a method for determining reselection timing for assisting in a cell reselection according to embodiments of the disclosure. The method is applicable to a UE.

As illustrated in FIG. 1, the following steps are included.

Step 101, timing information transmitted by a network side device for assisting the UE in the cell reselection is received and the reselection timing is determined according to the timing information.

Step 102, a neighboring cell measurement is performed at the reselection timing to perform the cell reselection. According to embodiments of the disclosure, the UE is a ground receiver. The ground receiver may be a mobile receiver or fixed receiver for receiving signals of various satellites, which is not limited according to embodiments. The network side device may be a satellite gateway or 5G base station communicating with the satellite gateway, which is not limited according to embodiments.

In an implementation according to embodiments of the disclosure, the timing information includes at least one of a system frame number K at which a serving cell is going to stop serving; a duration T2, in which the duration T2 is a serving duration that the serving cell can provide; universal time coordinated (UTC) T3; or ephemeris time information T4.

According to embodiments of the disclosure, the system frame number K at which the NTN cell is going to stop serving for a certain area is determined according to the obtained timing information related to the system frame number. The system frame number is 0-1023. Each frame has a fixed duration, for example, 10 milliseconds (ms). The system frame number in a period is from 0 to 1023. That is, after 1024*10 ms=10.24 seconds, a frame period is completed.

The duration information is how many seconds of serving duration the serving cell can provide. The serving duration is counted in units of 10 ms. The UTC T3, also known as a universal time, is based on a Gregorian calendar since 00:00:00 on January 1, 1900, and the UTC seconds are calculated in units of 10 ms, to obtain the UTC T3. The ephemeris time information T4 is the ephemeris of the satellite, which may be used to accurately calculate, predict, describe, and track operation states of satellites and flying objects, including an ephemeris reference time and a duration. This duration is, after the current ephemeris reference time T4, in which services are expressed to be provided to a certain area. As an implementation, the ephemeris reference time is determined according to the UTC.

According to embodiments of the disclosure, when each satellite is flying around the Earth, a serving range of each satellite for the ground area may change, that is, for the UE on the ground, the flight of the satellite around the Earth may make the communication link between the UE and the serving cell of the certain satellite is disconnected. Therefore, the cell reselection is required, that is, a serving satellite or a different cell of the satellite is reselected. Usually, when the cell reselection is performed, an S criterion is used, in which the S criterion is that the UE continuously measures the signal power Srxlev and the signal quality Squal of the received communication signals of different satellites, and determines a satellite where the signal power Srxlev and the signal quality Squal are both greater than the threshold, and when it is detected that the signal power Srxlev and the signal quality Squal of the satellite are continuously greater than the threshold for a set period of time, switches to the serving cell corresponding to the satellite to achieve the cell reselection. However, the selection manner of the S criterion takes a long period of time. When performing the cell handover, the selected satellite with the strongest field strength signal has moved to a position where the UE may not receive the signal, resulting in too late cell reselection, which makes the communication link between the UE and the satellite is disconnected and affects the normal use of the UE. Therefore, according to embodiments of the disclosure, the UE determines the reselection timing for the UE to perform the neighboring cell measurement according to at least one of the above timing information obtained from the network side device, and performs the neighboring cell measurement at the reselection timing to perform the cell reselection. The specific content of the timing information used to assist the UE in the cell reselection is determined, the reliability of the cell reselection is improved, and the disconnection of the communication link is avoided.

According to the method for determining the reselection timing for assisting in the cell reselection according to the embodiments of the disclosure, the UE receives the timing information transmitted by the network side device for assisting the UE in the cell reselection, determines the reselection timing according to the timing information, and performs the neighboring cell measurement at the reselection timing to perform the cell reselection. The specific content of the timing information used to assist the UE in the cell reselection is determined according to the embodiments of the disclosure, which facilitates the UE to determine the reselection timing according to the timing information, improves the reliability of the cell reselection, and avoids no network coverage.

According to the above embodiments, it is explained that the timing information for assisting the UE to perform the cell reselection includes multiple pieces of timing information, and the manners for determining the reselection timing according to multiple pieces of timing information are different. The following uses different embodiments for specific descriptions.

Based on the above embodiments, according to embodiments, how to determine the reselection timing according to the timing information being the system frame number K at which the serving cell is going to stop serving is described. FIG. 2 is a schematic flowchart of another method for determining reselection timing for assisting in a cell reselection according to embodiments of the disclosure. As illustrated in FIG. 2, the method includes the following steps.

Step 201, a system frame number K at which a serving cell is going to stop serving, transmitted by a network side device for assisting the UE in the cell reselection, is received.

According to embodiments of the disclosure, when the timing information includes the system frame number K at which the serving cell is going to stop serving, the system frame number includes the following parameters: a system-frame-number period number M; a system-frame-number offset N; and a system message update period number L.

As an implementation, the system frame number is 0-1023, and the system-frame-number period number M is 1, that is, 1024 system frames have been experienced for one period.

As an implementation according to embodiments of the disclosure, when the timing information includes the system frame number K at which the serving cell is going to stop serving, the system-frame-number period number M and the system-frame-number offset N are also included. Therefore, a serving duration P that a current service cell can provide may be determined by a formula of

$$P=M*10.24+N/100-K/100 \text{ (seconds)}.$$

The value range of the system-frame-number offset N is 0-1023, and N needs 10 bits to represent at this time.

As another implementation according to embodiments of the disclosure, when the timing information includes the system frame number K at which the serving cell is going to stop serving, the system-frame-number period number M, the system-frame-number offset N, and the system message update period number L are also included. Therefore, a serving duration P that a current service cell can provide may be determined by a formula of:
P=M*10.24+L*Q/100+N/100-K/100 (seconds), in which Q presents a system period update length. As an implementation, the system period update length may be represented by the number of radio frames, for example, the system period update length is the duration of 3 radio frames.

The system-frame-number offset N is smaller than the value range of N in the previous implementations, and the system message update period number L may represent part of the system-frame-number offset.

In an implementation according to embodiments of the disclosure, the system-frame-number period number M is obtained from a system message obtained by the UE from the network side device. For example, if the UE receives the system message transmitted by the network side device when the system frame number is 0, the UE may also receive the system message updated by the network side device when the next system frame number is 0. The system message includes the system-frame-number period number M that needs to be updated, that is, L, Q, K, and N may not be updated in the system message, and the period number M keeps decreasing during the update process. For example, the system-frame-number period number is M in the first system-frame-number period, and the system-frame-number period number is M-1 in the next system-frame-number period.

According to embodiment of the disclosure, the serving duration P calculated according to the system frame number K at which the serving cell is going to stop serving, the system-frame-number period number M, the system-frame-number offset N, and the system message update period number L is used as an example for illustration. For example, 1024 system frames have been experienced in one system-frame-number period; when the system frame number K at which the serving cell is going to stop serving is frame 1000, the system-frame-number offset N is 120 frames, the system message update period number L is 2, the system period update length Q is 70 frames, and the system-frame-number period number M in the first received system message transmitted by the network side device is 4, the serving duration that the current serving cell can provide is P=4* 1024/100+2*70/100+120/100-1000/100 (seconds); while the serving duration that the serving cell can provide is continuously decreasing, the system-frame-number period number M in the next received system message transmitted by the network side device is reduced to 3, so that the serving duration that the current serving cell can provide P=3* 1024/100+2*70/100+120/100-1000/100 (seconds); and so on; and when the system-frame-number period number M in the last received system message transmitted by the network side device is reduced to 0, so that the serving duration that the current serving cell can provide P=0* 1024/100+2*70/100+120/100-1000/100 (seconds).

When P is calculated according to the system frame number K at which the serving cell is going to stop serving, the system-frame-number period number M, and the system-frame-number offset N, the change principle of the period number M is the same with the above, which is no longer repeated according to embodiments.

According to embodiment of the disclosure, the network updates the parameters at least once in every system frame number (SFN) period. The network transmits the parameters through system information. The network needs to update the parameters every system information update period. Assuming that the duration transmitted by the network last time through the system information is L, the duration transmitted in the update period is L-system information update period length. Normally, the network updates the duration every time the ephemeris time parameter is updated. The network does not need to update the time parameters before stopping servicing to a certain area.

Step 202, the reselection timing for the UE to perform a neighboring cell measurement is determined according to the system frame number K at which the serving cell is going to stop serving.

According to embodiment of the disclosure, a start time point of the serving duration P is obtained and used as a first time point, and the reselection timing for the UE to perform the neighbor cell measurement is determined according to the first time point, the serving duration P, and a time offset. The time offset is transmitted by the network side device or stipulated in the protocol. When the time offset is not transmitted by the network side device or is not stipulated in the protocol, the time offset is 0.

Regarding the determination of the reselection timing, in an implementation according to embodiment of the disclosure, the reselection timing=first time point T1+serving duration P-time offset Toffset.

Step 203, the neighboring cell measurement is performed at the reselection timing to perform the cell reselection.

In an implementation according to embodiment of the disclosure, the neighbor cell measurement is performed at the reselection timing. During the process of the cell reselection, the ephemeris information of each satellite may be obtained. The cell reselection is performed by combining the start time point and the end time in the ephemeris information that each satellite can serve the UE to improve the reliability of the cell reselection.

According to the method for determining the reselection timing for assisting in the cell reselection according to the embodiments of the disclosure, the UE receives the timing information transmitted by the network side device for assisting the UE in the cell reselection, and determines the reselection timing according to the timing information. When the timing information includes the system frame number K that the serving cell is going to stop serving, the serving duration P that the current serving cell can provide is determined according to the system-frame-number period number M, the system-frame-number offset N, and the system message update period number L, and the reselection timing for the UE to perform the neighbor cell measurement is determined according to the start time point of the serving duration P, the serving duration P, and the time offset. The specific content of the timing information used to assist the UE in the cell reselection is determined according to embodiments of the disclosure, which is convenient for the UE to determine the reselection timing according to the timing information, which improves the reliability of the cell reselection and avoids no network coverage.

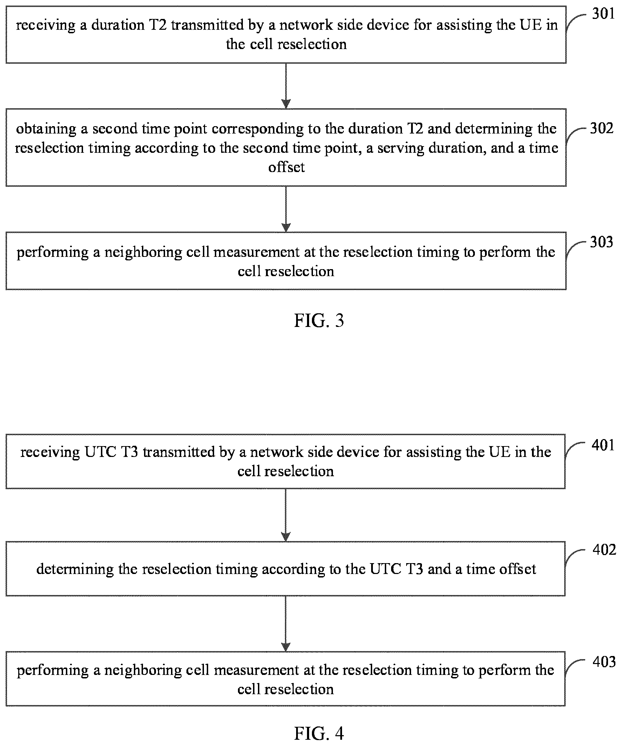

Based on the above embodiments, according to embodiments, how to determine the reselection timing according to the timing information being the duration T2 is described. FIG. 3 is a schematic flowchart of another method for determining timing for assisting in a cell reselection according to embodiments of the disclosure. As illustrated in FIG. 3, the method includes the following steps.

Step 301, a duration T2 transmitted by a network side device for assisting the UE in the cell reselection is received.

The duration T2 is a serving duration that the serving cell can provide, that is, the duration during which the serving cell can still provide services to the UE.

Step 302, a second time point corresponding to the duration T2 is obtained and the reselection timing is determined the according to the second time point, a serving duration, and a time offset.

The serving duration is a duration in which the serving cell can provide serving during the duration T2. The time offset is a time margin set by the network side device or stipulated in the protocol.

According to embodiments of the disclosure, the second time point corresponding to the duration T2 is obtained. The second time point is the start time point of the obtained duration T2, which may be recorded as the second time point T2. Therefore, as an implementation, the UE obtains the starting time corresponding to the duration T2 is the second time point T2, plus the serving duration T1 that the serving cell can still serve at present, and then subtracting the time offset Toffset to obtain the moment corresponding to the reselection timing.

Step 303, a neighboring cell measurement is performed at the reselection timing to perform the cell reselection.

For the manner of the cell reselection, reference may be made to the descriptions according to the foregoing embodiments for details, and details will not be repeated according to embodiments.

According to the method for determining the reselection timing for assisting in the cell reselection according to the embodiments of the disclosure, the UE receives the timing information transmitted by the network side device for assisting the UE in the cell reselection, and determines the reselection timing according to the timing information. When the timing information includes the duration T2, the second time point corresponding to the duration T2 is obtained, and the reselection timing is determined according to the second time point, the service duration, and the time offset. The specific content of the timing information used to assist the UE in the cell reselection is determined according to embodiments of the disclosure, which is convenient for the UE to determine the reselection timing according to the timing information, which improves the reliability of the cell reselection and avoids no network coverage.

Based on the above embodiments, according to embodiments, how to determine the reselection timing according to the UTC T3 is described. FIG. 4 is a schematic flowchart of another method for determining timing for assisting in a cell reselection according to embodiments of the disclosure. As illustrated in FIG. 4, the method includes the following steps.

Step 401, UTC T3 transmitted by a network side device for assisting the UE in the cell reselection is received.

The UTC T3, also known as the universal unified time, starts from 00:00:00 on January 1, 1900 in the Gregorian calendar, and the number of UTC seconds is calculated in units of 10 ms to get the UTC T3.

Step 402, the reselection timing is determined according to the UTC T3 and a time offset.

The time offset is a time margin reserved for measuring the UTC T3, specified by the network side device or the protocol. When the network side device or protocol does not specify, the time offset is 0, that is, the reselection timing is determined according to the UTC T3.

In the case that the time offset is specified by the network side device or protocol, different implementation manners are used below to describe the manners of determining the reselection timing respectively.

In the first implementation according to embodiments of the disclosure, system UTC is obtained according to a system information block (SIB9) transmitted by the network side device. The system UTC is called T5 for the convenience of distinction. The number 9 in SIB9 refers to a number in the SIB. When the time difference between the system UTC T5 and the UTC T3 is less than or equal to the time offset, the system UTC T5 is used as the reselection timing.

In the second implementation according to embodiments of the disclosure, local UTC T6 is obtained, that is, the local UTC obtained by the UE, which is called UTC T6 for the convenience of distinction. When the time difference between the local UTC T6 and the UTC T3 is less than or equal to the time offset, the local UTC T6 is used as the reselection timing.

In the third implementation according to embodiments of the disclosure, ephemeris information is obtained, and a first ephemeris reference time T7 is generated according to the ephemeris information. When the first ephemeris reference time T7 is equal to a difference between the UTC T3 and the time offset, the first ephemeris reference time T7 is used as the reselection timing.

It should be noted that the satellite ephemeris information determines the time, coordinate, orientation, speed, and other parameters of the flying object based on the mathematical relationship between the six orbital parameters of Kepler's law. The ephemeris reference time carried in the ephemeris information is referred to as the first ephemeris reference time T7 for easy distinction, in which the ephemeris reference time is related to satellite orbit parameters.

Step 403, a neighboring cell measurement is performed at the reselection timing to perform the cell reselection.

For the manner of the cell reselection, reference may be made to the descriptions according to the foregoing embodiments for details, and details will not be repeated according to embodiments.

According to the method for determining the reselection timing for assisting in the cell reselection according to the embodiments of the disclosure, the UE receives the timing information transmitted by the network side device for assisting the UE in the cell reselection, and determines the reselection timing according to the timing information. When the timing information is UTC T3, the reselection timing is determined according to the UTC T3 and the time offset. The specific content of the timing information used to assist the UE in the cell reselection is determined according to embodiments of the disclosure, which is convenient for the UE to determine the reselection timing according to the timing information, which improves the reliability of the cell reselection and avoids no network coverage.

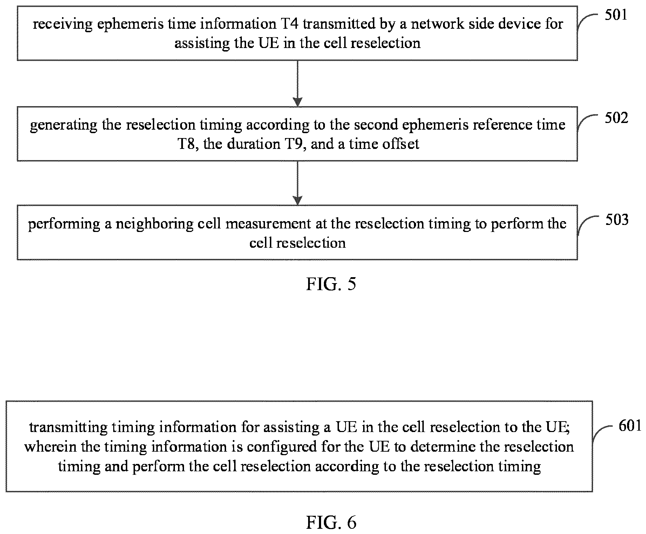

Based on the above embodiments, according to embodiments, how to determine the reselection timing according to the ephemeris time information T4 is described. FIG. 5 is a schematic flowchart of another method for determining timing for assisting in a cell reselection according to embodiments of the disclosure. As illustrated in FIG. 5, the method includes the following steps.

Step 501, ephemeris time information T4 transmitted by a network side device for assisting the UE in the cell reselection is received.

The ephemeris time information T4 includes a second ephemeris reference time T8 and a duration T9, and the duration T9 indicates that the service can be provided to the UE within the duration T9 after the second ephemeris reference time T8.

Step 502, the reselection timing is generated according to the second ephemeris reference time T8, the duration T9, and a time offset.

The time offset is transmitted by the network side device or stipulated in the protocol.

According to embodiments of the disclosure, when the network side device does not configure or the protocol does not specify the time offset, the time offset is zero, thus, the reselection timing is generated according to the second ephemeris reference time T8 and the duration T9.

In an implementation according to embodiments of the disclosure, when the network side device transmits or the protocol specifies the time offset, the reselection timing is calculated based on the second ephemeris reference time T8, plus the duration T9, and then subtracting the time offset.

Further, in an implementation according to embodiments of the disclosure, the duration T9 of the ephemeris time information T4 is updated every time the ephemeris reference time is updated, that is, after the ephemeris reference time is updated, the duration T9 is also updated. The updated duration T9 is a corresponding new duration obtained after every update of the ephemeris reference time. Furthermore, the reselection timing is determined according to the corresponding new duration T9 obtained after every update of the ephemeris reference time, which improves the accuracy of determining the reselection timing.

Step 503, a neighboring cell measurement is performed at the reselection timing to perform the cell reselection.

For the manner of the cell reselection, reference may be made to the descriptions according to the foregoing embodiments for details, and details will not be repeated according to embodiments.

According to the method for determining the reselection timing for assisting in the cell reselection according to the embodiments of the disclosure, the UE receives the ephemeris time information transmitted by the network side device for assisting the UE in the cell reselection, and determines the reselection timing according to the ephemeris reference time and the duration. When the time offset is specified by the network side device or protocol, the reselection timing is generated according to the corresponding ephemeris reference time, the duration, and the time offset. The specific content of the timing information used to assist the UE in the cell reselection is determined according to embodiments of the disclosure, which is convenient for the UE to determine the reselection timing according to the timing information, which improves the reliability of the cell reselection and avoids no network coverage.

In order to implement according to the above embodiments, a method for determining reselection timing for assisting in a cell reselection is provided according to embodiments and the method is performed by a network side device.

FIG. 6 is a schematic flowchart of another method for determining reselection timing for assisting in a cell reselection according to embodiments of the disclosure.

As illustrated in FIG. 6, the method includes the following steps.

Step 601, timing information for assisting a UE to perform the cell reselection is transmitted to the UE, in which the timing information is configured for the UE to determine the reselection timing.

The timing information includes at least one of: a system frame number K at which a serving cell is going to stop serving; a duration T2, in which the duration T2 is a serving duration that the serving cell can provide; UTC T3; or ephemeris time information T4.

The network side device may be a satellite gateway or a 5G base station communicating with the satellite gateway, which is not limited according to embodiments.

In an implementation according to the disclosure, the network side device transmits the timing information for assisting the UE in the cell reselection according to the generated system message.

For related descriptions about the timing information, reference may be made to related explanations and descriptions on the UE side, which are not limited according to embodiments.

According to the method for determining the reselection timing for assisting in the cell reselection according to embodiments of the disclosure, the UE receives the timing information transmitted by the network side device for assisting the UE in the cell reselection and determines the reselection timing according to the timing information, in which the timing information includes at least one of: the system frame number K at which the serving cell is going to stop serving; the duration T2, in which the duration T2 is the serving duration that the serving cell can provide; the UTC T3; or the ephemeris time information T4. The specific content of the timing information used to assist the UE in the cell reselection is determined according to embodiments of the disclosure, which is convenient for the UE to determine the reselection timing according to the timing information, improves the reliability of the cell reselection, and avoids no network coverage.

Based on the above embodiments, another method for determining reselection timing for assisting in a cell reselection according to embodiments of the disclosure is provided. As an implementation, when the timing information transmitted by the network side device to the UE includes a system frame number K, at least one of the following parameters is also included: a system-frame-number period number M; a system-frame-number offset N; or a system message update period number L.

The system-frame-number period number M, the system-frame-number offset N, and the system message update period number L are used to determine the serving duration P that the current serving cell of the UE can provide.

As an implementation, the system-frame-number period number M and the system-frame-number offset N are used to determine the serving duration P that the current serving cell of the UE can provide.

As another implementation manner, the system-frame-number period number M, the system-frame-number offset N, and the system message update period number L are used to determine the serving duration P that the current serving cell of the UE can provide.

When the parameters included in the timing information are different, the manners of determining the serving duration P are different. For the manner of determining P, reference may be made to the explanations according to the foregoing method embodiments corresponding to the UE, which will not be repeated according embodiments. As an implementation, the system-frame-number period number M is updated in every system frame number period. The specific update manner may be explained with reference to the embodiments corresponding to the UE side, which will not be repeated according to embodiments.

According to embodiments of the disclosure, the serving duration P is used for the UE to determine the reselection timing for the UE to perform the neighbor cell measurement according to the first time point determined according to the start time point of the serving duration P, the serving duration P, and the time offset. For a specific implementation manner, reference may be made to explanations according to the aforementioned embodiments corresponding to the UE side, and details will not be repeated according to embodiments.

The time offset is determined by the network side device and transmitted to the user device. Or the time offset is specified by the protocol. When the network side device does not configure the time offset or the protocol does not specify the time offset, the time offset is zero.

According to the method for determining the reselection timing for assisting in the cell reselection according to embodiments of the disclosure, the specific content of the system frame number K at which the serving cell is going to stop serving for assisting the UE in the cell reselection is determined, so that the UE may determine the reselection timing according to the system frame number K at which the serving cell is going to stop serving, which improves the reliability of the cell reselection and avoids no network coverage.

Based on the above embodiments, another method for determining the reselection timing for assisting in the cell reselection is provided according to embodiments. As an implementation, the reselection timing is determined according to duration information, and the network side device transmits the timing information, i.e.,

the duration T2 to the UE.

According to embodiments of the disclosure, the second time point corresponding to the duration T2 is used for the UE to determine the reselection timing according to the second time point, the serving duration, and the time offset.

The time offset is determined by the network side device and transmitted to the user device. Or the time offset is specified by the protocol. When the network side device does not configure the time offset or the protocol does not specify the time offset, the time offset is zero.

As an implementation manner, the duration T2 is updated at every system message update period. The duration T2 is a duration T2 after the system message update period is updated.

According to embodiments of the disclosure, the duration T2 is obtained by the UE from the system message transmitted by the network side device, so that the network side device updates the duration T2 at every system message update period to ensure the accuracy of the duration T2. Since it takes a period of time for the UE to obtain system information from the network side device, that is, the UE needs to wait for the length of the system information update period before it may obtain the system information. Therefore, the duration T2 is the duration T2 after the system information update period is updated, for example, the UE obtains the duration T2=L from the system message transmitted by the network side device, the length of the system message update period is X, and then the duration information obtained after the system message update period is updated is T2=L-X. Furthermore, the reselection timing is determined according to the updated duration T2 after every system message update period, which improves the accuracy of determining the reselection timing.

The manner for determining the reselection timing according to the duration information may refer to the explanations according to the above-mentioned embodiments corresponding to the UE, which will not be repeated according to embodiments.

According to the method for determining the reselection timing for assisting in the cell reselection according to embodiments of the disclosure, the specific content of the duration information used to assist the UE in the cell reselection is determined, so that the UE may determine the reselection timing according to the duration information, which improves the reliability of the cell reselection and avoids no network coverage.

Based on the above embodiments, another method for determining the reselection timing for assisting in the cell reselection is provided according to embodiments. As an implementation, the reselection timing is determined according to UTC T3. The timing information transmitted by the network side device to the UE is the UTC T3. The UTC T3 is used for the UE to determine the reselection timing according to the UTC T3 and the time offset. The time offset is determined by the network side device and transmitted to the user device. Or the time offset is specified by the protocol. When the network side device does not configure the time offset or the protocol does not specify the time offset, the time offset is zero.

In an implementation according to embodiments of the disclosure, when the timing information transmitted by the network side device to the UE is the UTC T3, the network side device may also transmit the system UTC T5 to the UE through the system information block SIB9. When the difference between the system UTC T5 and the UTC T3 is less than or equal to the time offset, the UE uses the system UTC T5 as the reselection timing.

The explanations according to the foregoing method embodiments performed by the UE are also applicable to these embodiments, and the principles are the same, so details are not repeated according to embodiments.

According to the method for determining the reselection timing for assisting in the cell reselection according to embodiments of the disclosure, the specific content of the UTC used to assist the UE in the cell reselection is determined, so that the UE may determine the reselection timing according to the UTC, which improves the reliability of the cell reselection and avoids no network coverage.

Based on the above embodiments, another method for determining the reselection timing for assisting in the cell reselection is provided according to embodiments. As an implementation, the reselection timing is determined according to the ephemeris time information T4. The timing information transmitted by the network side device to the UE is the ephemeris time information T4.

In an implementation according to embodiments of the disclosure, when the time offset is zero, the ephemeris time information T4 includes the second ephemeris reference time T8 and the duration T9. The second ephemeris reference time T8 and the duration T9 are used to determine the reselection timing.

In another implementation according to embodiments of the disclosure, when the time offset is not zero, the ephemeris time information T4 includes the second ephemeris reference time T8 and the duration T9. The second ephemeris reference time T8, the duration T9, and the time offset are used to determine the reselection timing.

As an implementation manner, the duration T9 in the ephemeris time information T4 is updated at every time the ephemeris reference time is updated.

The explanations according to the foregoing method embodiments performed by the UE are also applicable to these embodiments, and the principles are the same, so details are not repeated according to embodiments.

According to the method for determining the reselection timing for assisting in the cell reselection according to embodiments of the disclosure, the specific content of the ephemeris time information used to assist the UE in the cell reselection is determined, so that the UE may determine the reselection timing according to the ephemeris time information, which improves the reliability of the cell reselection and avoids no network coverage.

In order to realize the above embodiments, an apparatus for determining reselection timing for assisting in a cell reselection is provided according to embodiments.

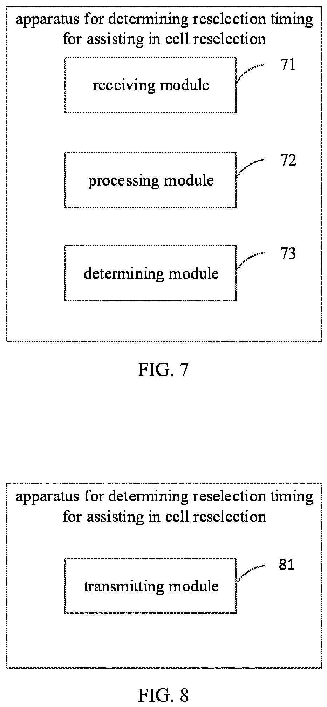

FIG. 7 is a schematic block diagram of an apparatus for determining reselection timing for assisting in a cell reselection according to embodiments of the disclosure. As illustrated in FIG. 7, the apparatus includes a receiving module 71, a processing module 72, and a determining module 73.

The receiving module 71 is configured to receive timing information transmitted by a network side device for assisting the UE in the cell reselection.

The processing module 72 is configured to determine the reselection timing according to the timing information.

The determining module 73 is configured to perform a neighboring cell measurement at the reselection timing to perform the cell reselection.

Further, as an implementation according to embodiments of the disclosure, the timing information includes at least one of a system frame number K at which a serving cell is going to stop serving; a duration T2, in which the duration T2 is a serving duration that the serving cell can provide; UTC T3; or ephemeris time information T4.

As an implementation manner according to embodiments of the disclosure, the processing module 72 is configured to: determining the reselection timing for the UE to perform a neighbor cell measurement according to the timing information; and perform the neighbor cell measurement at the reselection timing to perform the cell reselection.

As an implementation according to embodiments of the disclosure, when the timing information is the system frame number K at which the serving cell is going to stop serving, the system frame number includes the following parameters: a system-frame-number period number M in which the system frame number is 0-1023; a system-frame-number offset N; and a system message update period number L.

As an implementation according to embodiments of the disclosure, when a parameter obtained by the UE includes the system frame number K, a serving duration P that a current serving cell can provide is determined by a formula of:

$P=M*10.24+L*Q/100+N/100-K/100$ (seconds), in which Q presents a system period update length.

As an implementation according to embodiments of the disclosure, when a parameter obtained by the UE includes the system frame number K, a serving duration P that a current serving cell can provide is determined by a formula of:

$$P=M*10.24+N/100-K/100 \text{ (seconds).}$$

As an implementation according to embodiments of the disclosure, the system-frame-number period number M is updated by the network side device in every system-frame-number period.

As an implementation according to embodiments of the disclosure, the processing module 72 is further configured to: obtain a start time point of the serving duration P as a first time point; and determine the reselection timing for the UE to perform the neighbor cell measurement according to the first time point T1, the serving duration P, and a time offset Toffset.

As an implementation according to embodiments of the disclosure, the duration T2 that the cell can provide services is updated in every system message update period; or a duration T9 in the ephemeris time information T4 is updated at every time an ephemeris reference time is updated.

As an implementation according to embodiments of the disclosure, the processing module 72 is further configured to obtain a second time point corresponding to the duration T2; and determine the reselection timing according to the second time point T2, a serving duration T1, and a time offset Toffset.

As an implementation according to embodiments of the disclosure, the duration T2 is a duration T2 after the system message update period is updated.

As an implementation according to embodiments of the disclosure, the processing module 72 is further configured to determine the reselection timing according to the UTC T3 and a time offset Toffset.

According to embodiments of the disclosure, as the first implementation manner, the processing module 72 is also configured to obtain system UTC T5 in a system information block SIB9 transmitted by the network side device; and when a time difference between the system UTC T5 and the UTC T3 is less than or equal to the time offset, use the system UTC T5 as the reselection timing.

According to embodiments of the disclosure, as the second implementation manner, the processing module 72 is also configured to obtain local UTC T6; and when a time difference between the local UTC T6 and the UTC T3 is less than or equal to the time offset, use the local UTC T6 as the reselection timing.

According to embodiments of the disclosure, as the third implementation manner, the processing module 72 is also configured to obtain ephemeris information; generate a first ephemeris reference time T7 according to the ephemeris information; and when the first ephemeris reference time T7 is equal to a difference between the UTC T3 and the time offset, use the first ephemeris reference time T7 as the reselection timing.

As an implementation according to embodiments of the disclosure, the ephemeris time information T4 includes a second ephemeris reference time T8 and a duration T9. The processing module 72 is further configured to generate the reselection timing according to the second ephemeris reference time T8, the duration T9, and the time offset Toffset.

As an implementation according to embodiments of the disclosure, the time offset is transmitted by the network side device or stipulated by a protocol.

As an implementation according to embodiments of the disclosure, the time offset is zero when the network side device does not configure or the protocol does not stipulate.

As an implementation according to embodiments of the disclosure, the ephemeris time information T4 includes a second ephemeris reference time T8 and a duration T9. The processing module 72 is also configured to generate the reselection timing according to the second ephemeris reference time T8 and the duration T9.

As an implementation according to embodiments of the disclosure, the duration T9 is a duration T9 updated at each ephemeris reference time update.

It should be noted that the foregoing explanations and descriptions according to the embodiment of the method executed by the UE are also applicable to the apparatus of these embodiments, and the principle is the same, so details are not repeated according to embodiments.

According to the apparatus for determining the reselection timing for assisting in the cell reselection according to embodiments of the disclosure, the UE receives the timing information transmitted by the network side device for assisting the UE in the cell reselection and determines the reselection timing according to the timing information, in which the timing information includes at least one of: the system frame number K at which the serving cell is going to stop serving; the duration T2, in which the duration T2 is the serving duration that the serving cell can provide; the UTC T3; or the ephemeris time information T4. The specific content of the timing information used to assist the UE in the cell reselection is determined according to embodiments of the disclosure, which is convenient for the UE to determine the reselection timing according to the timing information, improves the reliability of the cell reselection, and avoids no network coverage.

In order to realize the above embodiments, an apparatus for determining reselection timing for assisting in a cell reselection is provided according to embodiments.

FIG. 8 is a schematic block diagram of an apparatus for determining reselection timing for assisting in a cell reselection according to embodiments of the disclosure. As illustrated in FIG. 8, the apparatus includes a transmitting module 81.

The transmitting module 81 is configured to transmit timing information for assisting a UE in the cell reselection to the UE; in which the timing information is configured for the UE to determine the reselection timing and perform the cell reselection according to the reselection timing.

Further, as an implementation manner, the timing information includes at least one of a system frame number K at which a serving cell is going to stop serving; a duration T2, in which the duration T2 is a serving duration that the serving cell can provide; UTC T3; or ephemeris time information T4.

As an implementation manner, when the timing information is the system frame number K at which the serving cell is going to stop serving, the system frame number includes the following parameters: a system-frame-number period number M in which the system frame number is 0-1023; a system-frame-number offset N; and a system message update period number L.

As an implementation manner, the system-frame-number period number M is updated in every system-frame-number period.

As an implementation manner, the system-frame-number period number M and the system-frame-number offset N are used to determine a serving duration P that a current serving cell can provide.

As an implementation manner, the system-frame-number period number M, the system-frame-number offset N, and the system message update period number L are used to determine a serving duration P that a current serving cell can provide.

As an implementation manner, the serving duration P is used for the UE to determine the reselection timing to perform the neighbor cell measurement according to a first time point determined by the UE according to a start time point of the serving duration P, the serving duration P, and a time offset.

As an implementation manner, the duration T2 during which the cell can provide services is updated at every system message update period; or the duration T9 of the ephemeris time information T4 is updated every time an ephemeris reference time is updated.

As an implementation manner, the UTC T3 is used for the UE to determine the reselection timing according to the UTC T3 and a time offset.

As an implementation, the transmitting module 81 is further configured to transmit system UTC T5 to the UE through the system information block SIB9; in which when the time difference between the system UTC T5 and the UTC T3 is less than or equal to the time offset, the UE uses the system UTC T5 as the reselection timing.

As an implementation manner, the transmitting module 81 is further configured to transmit the time offset to the UE.

It should be noted that the foregoing explanations and descriptions according to the embodiment of the method executed by the UE are also applicable to the apparatus of these embodiments, and the principle is the same, so details are not repeated according to embodiments.

According to the apparatus for determining the reselection timing for assisting in the cell reselection according to embodiments of the disclosure, the specific content of the timing information used to assist the UE in the cell reselection is determined according to embodiments of the disclosure, which is convenient for the UE to determine the reselection timing according to the timing information, improves the reliability of the cell reselection, and avoids no network coverage.

In order to realize the above embodiments, the disclosure also provides a communication device.

The communication device according to embodiments of the disclosure includes a processor, a transceiver, a memory, and an executable program stored on the memory and capable of being executed by the processor. When the processor executes the executable program, the methods described according to the foregoing method embodiments are performed. The communication device may be the foregoing UE or network side device.

The processor may include various types of storage media. The storage media are non-transitory computer storage media and may continue to memorize and store information thereon after the communication device is powered off. The processor may be connected to the memory through a bus or the like, for reading the executable program stored on the memory, for example, at least one of FIG. 1 to FIG. 5, or FIG. 6.

In order to realize the above embodiments, the disclosure also provides a computer-readable storage medium.

The computer storage medium according to embodiments of the disclosure stores an executable program; and after the executable program is executed by a processor, the above-mentioned methods may be implemented, for example, at least one of FIG. 1 to FIG. 5, or FIG. 6.

In order to realize the above embodiments, the disclosure also provides a computer program product.

The computer program product according to embodiments of the disclosure includes a computer program, and when the computer program is executed by a processor, the above-mentioned methods may be implemented, for example, at least one of the method embodiments corresponding to FIG. 1 to FIG. 5, or the method embodiments corresponding to FIG. 6.

In order to realize the above embodiments, the disclosure also provides a UE.

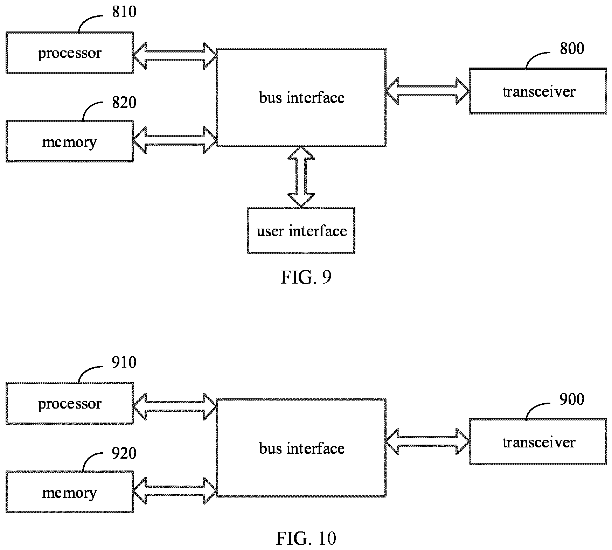

FIG. 9 is a block diagram of a UE according to embodiments of the disclosure. For example, a UE may be any receiver capable of receiving satellite signals, such as a mobile phone, a computer, a digital broadcast UE, a messaging device, a medical device, a fitness device, a personal digital assistant, and the like.

As illustrated in FIG. 9, the terminal includes: a transceiver 800, a processor 810, and a memory 820.

The memory 820 is used to store computer programs; the transceiver 800 is used to transmit and receive data under the control of the processor 810; and the processor 810 is used to read the computer programs on the memory 820 and perform the operations: receiving timing information transmitted by a network side device for assisting the UE in the cell reselection and determining the reselection timing according to the timing information; and performing a neighboring cell measurement at the reselection timing to perform the cell reselection.

The timing information includes at least one of: a system frame number K at which a serving cell is going to stop serving; a duration T2, in which the duration T2 is a serving duration that the serving cell can provide; UTC T3; or ephemeris time information T4.

The transceiver 800 is used to receive and transmit data under the control of the processor 810.

In FIG. 9, the bus architecture may include any number of interconnected buses and bridges. In detail, various circuits of one or more processors represented by the processor 810 and a memory represented by the memory 820 are connected together. The bus architecture may also connect together various other circuits such as peripherals, voltage regulators, and power management circuits, which are well known in the art and thus will not be further described herein. The bus interface provides the interface. The transceiver 800 may be a plurality of elements, including a transmitter and a receiver, providing means for communicating with various other devices over transmission media. The transmission media include wireless channels, wired channels, fiber optic cables, etc. For different UEs, the user interface may also be an interface capable of connecting externally and internally to required devices, and the connected devices include but not limited to keypads, displays, speakers, microphones, joysticks, and the like.

The processor 810 is responsible for managing the bus architecture and general processing, and the memory 820 may store data used by the processor 810 when performing operations.

Optionally, the processor 810 may be a central processing unit (CPU), an application specific integrated circuit (ASIC), a field-programmable gate array (FPGA), a complex programmable logic device (CPLD), or the like. The processor 810 may also adopt a multi-core architecture.

The processor 810 is configured to execute any one of the methods in FIG. 1 to FIG. 5 according to the embodiments of the disclosure according to the obtained executable instructions by calling the computer program stored in the memory. The processor 810 and the memory 820 may also be arranged physically separately.

It should be noted that the above UE according to the embodiments of the disclosure may implement all the method steps implemented according to the above method embodiments in FIG. 1 to FIG. 5, and may achieve the same technical effect, so the same parts and beneficial effects of the descriptions according to the embodiments as those in the method embodiments will not be repeated herein.

In order to realize the above embodiments, a network side device is provided according to embodiments.

As illustrated in FIG. 10, it is a block diagram of a network side device according to embodiments of the disclosure. As illustrated in FIG. 10, the network side device includes a transceiver 900, a processor 910, and a memory 920.

The memory 920 is used to store computer programs; the transceiver 900 is used to transmit and receive data under the control of the processor 910; and the processor 910 is used to read the computer programs on the memory 920 and perform the following operation: transmitting timing information for assisting a UE in the cell reselection to the UE; in which the timing information is configured for the UE to determine the reselection timing.

The timing information includes at least one of: a system frame number K at which a serving cell is going to stop serving; a duration T2, in which the duration T2 is a serving duration that the serving cell can provide; UTC T3; or ephemeris time information T4.

In FIG. 10, the bus architecture may include any number of interconnected buses and bridges. In detail, various circuits of one or more processors represented by the processor 910 and a memory represented by the memory 920 are connected together. The bus architecture may also connect together various other circuits such as peripherals, voltage regulators, and power management circuits, which are well known in the art and thus will not be further described herein. The bus interface provides the interface. The transceiver 900 may be a plurality of elements, including a transmitter and a receiver, providing means for communicating with various other devices over transmission media. The transmission media include wireless channels, wired channels, fiber optic cables, etc. The processor 910 is responsible for managing the bus architecture and general processing, and the memory 920 may store data used by the processor 910 when performing operations.

The processor 910 may be a CPU, an ASIC, an FPGA, a CPLD, or the like, and the processor 910 may also adopt a multi-core architecture.

It should be noted that the above network device according to the embodiments of the disclosure may implement all the method steps implemented according to the above method embodiments in FIG. 6, and may achieve the same technical effect, so the same parts and beneficial effects of the descriptions according to the embodiments as those in the method embodiments will not be repeated herein.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining reselection timing for assisting in a cell reselection, performed by a user equipment (UE), the method comprising:

   receiving timing information transmitted by a network side device for assisting the UE in the cell reselection and determining the reselection timing according to the timing information; and performing a neighboring cell measurement at the reselection timing to perform the cell reselection.

2. The method according to claim 1, wherein the timing information comprises at least one of:

   a system frame number K at which a serving cell is going to stop serving; a duration T2, wherein the duration T2 is a serving duration that the serving cell can provide; universal time coordinated (UTC) T3; or ephemeris time information T4.

3. The method according to claim 1, wherein when the timing information comprises a system frame number K at which a serving cell is going to stop serving, a system frame number comprises:

   a system-frame-number period number M, where the system frame number is 0-1023; a system-frame-number offset N; or a system message update period number L.

4. The method according to claim 2 or 3, wherein when a parameter obtained by the UE comprises the system frame number K, a serving duration P that a current serving cell can provide is determined by a formula of
   $P=M*10.24+L*Q/100+N/100-K/100$ (seconds), wherein Q presents a system period update length.

5. The method according to claim 2 or 3, wherein when a parameter obtained by the UE comprises the system frame number K, a serving duration P that a current serving cell can provide is determined by a formula of:

$$P=M*10.24+N/100-K/100 \text{ (seconds)}.$$

**6.** The method according to claim 3, wherein the system-frame-number period number M is updated by the network side device in every system-frame-number period.

**7.** The method according to any one of claims 4-6, wherein determining the reselection timing for the UE to perform the neighbor cell measurement, according to the timing information, comprises:

obtaining a start time point of the serving duration P as a first time point; and
determining the reselection timing for the UE to perform the neighbor cell measurement according to the first time point T1, the serving duration P, and a time offset Toffset.

**8.** The method according to claim 2, wherein,

the duration T2 that the cell can provide services is updated in every system message update period;
or a duration T9 in the ephemeris time information T4 is updated at every time an ephemeris reference time is updated.

**9.** The method according to claim 1 or 8, wherein determining the reselection timing for the UE to perform the neighbor cell measurement, according to the timing information, comprises:

obtaining a second time point corresponding to the duration T2; and
determining the reselection timing according to the second time point T2, a serving duration T1, and a time offset Toffset.

**10.** The method according to claim 9, wherein the duration T2 is a duration T2 after the system message update period is updated.

**11.** The method according to claim 1, wherein determining the reselection timing for the UE to perform the neighbor cell measurement, according to the timing information, comprises:
determining the reselection timing according to the UTC T3 and a time offset Toffset.

**12.** The method according to claim 11, wherein determining the reselection timing according to the UTC T3 and the time offset Toffset comprises:

obtaining system UTC T5 in a system information block SIB9 transmitted by the network side device; and
when a time difference between the system UTC T5 and the UTC T3 is less than or equal to the time offset, using the system UTC T5 as the reselection timing.

**13.** The method according to claim 11, wherein determining the reselection timing according to the UTC T3 and the time offset comprises:

obtaining local UTC T6; and
when a time difference between the local UTC T6 and the UTC T3 is less than or equal to the time offset, using the local UTC T6 as the reselection timing.

**14.** The method according to claim 11, wherein determining the reselection timing according to the UTC T3 and the time offset comprises:

obtaining ephemeris information;
generating a first ephemeris reference time T7 according to the ephemeris information; and
when the first ephemeris reference time T7 is equal to a difference between the UTC T3 and the time offset, using the first ephemeris reference time T7 as the reselection timing.

**15.** The method according to claim 1 or 8, wherein the ephemeris time information T4 comprises a second ephemeris reference time T8 and a duration T9, and determining the reselection timing for the UE to perform the neighbor cell measurement, according to the timing information, comprises:
generating the reselection timing according to the second ephemeris reference time T8, the duration T9, and the time offset Toffset.

**16.** The method according to any one of claims 7, 9, 11-15, wherein the time offset is transmitted by the network side device or stipulated by a protocol.

**17.** The method according to any one of claims 7, 9, 11-15, wherein the time offset is zero when the network side device does not configure or the protocol does not stipulate.

**18.** The method according to claim 1 or 8, wherein the ephemeris time information T4 comprises a second ephemeris reference time T8 and a duration T9, and determining the reselection timing for the UE to perform the neighbor cell measurement, according to the timing information, comprises:
generating the reselection timing according to the second ephemeris reference time T8 and the duration T9.

**19.** The method according to claim 18, wherein the duration T9 is a duration T9 updated at each ephemeris reference time update.

**20.** A method for determining reselection timing for assisting in a cell reselection, performed by a non-terrestrial networks (NTN) side device, the method comprising:
transmitting timing information for assisting a user equipment (UE) in the cell reselection to the UE; wherein the timing information is configured for the UE to determine the reselection timing and perform the cell reselection according to the reselection timing.

**21.** The method according to claim 20, wherein the timing information comprises at least one of:

a system frame number K at which a serving cell is going to stop serving;
a duration T2, wherein the duration T2 is a serving duration that the serving cell can provide;
universal time coordinated (UTC) T3; or
ephemeris time information T4.

**22.** The method according to claim 20, wherein when the timing information comprises a system frame number K at which a serving cell is going to stop serving, a system frame number comprises:

a system-frame-number period number M, where the system frame number is 0-1023;
a system-frame-number offset N; or
a system message update period number L.

**23.** The method according to claim 22, wherein the system-frame-number period number M is updated in every system-frame-number period.

**24.** The method according to claim 22, wherein the system-frame-number period number M and the system-frame-number offset N are used to determine a serving duration P that a current serving cell can provide.

**25.** The method according to claim 22, wherein the system-frame-number period number M, the system-frame-number offset N, and the system message update period number L are used to determine a serving duration P that a current serving cell can provide.

**26.** The method according to claim 24 or 25, wherein the serving duration P is used for the UE to determine the reselection timing to perform the neighbor cell measurement according to a first time point determined by the UE according to a start time point of the serving duration P, the serving duration P, and a time offset.

**27.** The method of claim 20, wherein,

the duration T2 is updated at every system message update period;
or a duration T9 in the ephemeris time information T4 is updated at every time an ephemeris reference time is updated.

**28.** The method according to claim 20, wherein the UTC T3 is used for the UE to determine the reselection timing according to the UTC T3 and a time offset.

**29.** The method according to claim 26 or 28, further comprising:
transmitting the time offset to the UE.

**30.** An apparatus for determining reselection timing for assisting in a cell reselection, comprising:

a receiving module, configured to receive timing information transmitted by a network side device for assisting the UE in the cell reselection;
a processing module, configured to determine the reselection timing according to the timing information; and
a determining module, configured to perform a neighboring cell measurement at the reselection timing to perform the cell reselection.

**31.** An apparatus for determining reselection timing for assisting in a cell reselection, comprising:
a transmitting module, configured to transmit timing information for assisting a user equipment (UE) in the cell reselection to the UE; wherein the timing information is configured for the UE to determine the reselection timing and perform the cell reselection according to the reselection timing.

**32.** A communication device, comprising: a transceiver; a memory; and a processor, connected to the transceiver and the memory respectively, configured to control transmissions and receptions of wireless signals of the transceiver and realize the method according to any one of claims 1 to 19 or the method according to any one of claims 20 to 29, by executing computer-executable instructions on the memory.

**33.** A computer-readable storage medium, wherein the computer storage medium stores computer-executable instructions; and when the computer-executable instructions are executed by a processor, the method according to any one of claims 1 to 19 or the method according to any one of claims 20 to 29 is performed.

**34.** A computer program product comprising a computer program which, when executed by a processor, performs the method according to any one of claims 1

**EP 4 383 819 A1**

to 19 or the method according to any one of claims 20 to 29.

receiving timing information transmitted by a network side device for assisting the UE in the cell reselection and determining the reselection timing according to the timing information — 101

performing a neighboring cell measurement at the reselection timing to perform the cell reselection — 102

FIG. 1

receiving a system frame number K at which a serving cell is going to stop serving, transmitted by a network side device for assisting the UE in the cell reselection — 201

determining the reselection timing for the UE to perform a neighboring cell measurement according to the system frame number K at which the serving cell is going to stop serving — 202

performing the neighboring cell measurement at the reselection timing to perform the cell reselection — 203

FIG. 2

receiving a duration T2 transmitted by a network side device for assisting the UE in the cell reselection — 301

obtaining a second time point corresponding to the duration T2 and determining the reselection timing according to the second time point, a serving duration, and a time offset — 302

performing a neighboring cell measurement at the reselection timing to perform the cell reselection — 303

FIG. 3

receiving UTC T3 transmitted by a network side device for assisting the UE in the cell reselection — 401

determining the reselection timing according to the UTC T3 and a time offset — 402

performing a neighboring cell measurement at the reselection timing to perform the cell reselection — 403

FIG. 4

receiving ephemeris time information T4 transmitted by a network side device for assisting the UE in the cell reselection ⟍ 501

↓

generating the reselection timing according to the second ephemeris reference time T8, the duration T9, and a time offset ⟍ 502

↓

performing a neighboring cell measurement at the reselection timing to perform the cell reselection ⟍ 503

FIG. 5

transmitting timing information for assisting a UE in the cell reselection to the UE; wherein the timing information is configured for the UE to determine the reselection timing and perform the cell reselection according to the reselection timing ⟍ 601

FIG. 6

apparatus for determining reselection timing
for assisting in cell reselection

receiving module — 71

processing module — 72

determining module — 73

FIG. 7

apparatus for determining reselection timing
for assisting in cell reselection

transmitting module — 81

FIG. 8

810

processor

820

memory

bus interface

user interface

800

transceiver

FIG. 9

910

processor

920

memory

bus interface

900

transceiver

FIG. 10

## INTERNATIONAL SEARCH REPORT

| International application No. |
| --- |
| **PCT/CN2021/111088** |

| **A.** | **CLASSIFICATION OF SUBJECT MATTER** |
| --- | --- |

H04W 36/08(2009.01)i; H04W 36/30(2009.01)i; H04W 36/32(2009.01)i

According to International Patent Classification (IPC) or to both national classification and IPC

| **B.** | **FIELDS SEARCHED** |
| --- | --- |

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 辅助, 小区, 重选, 时间, 测量, 确定, determin+, reselect+, time, cell, measur+

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | WO 2021068151 A1 (GUANGDONG OPPO MOBILE TELECOMMUNICATIONS CORP., LTD.) 15 April 2021 (2021-04-15) <br> description, paragraphs 7-152 | 1-34 |
| X | WO 2021062599 A1 (HUAWEI TECHNOLOGIES CO., LTD.) 08 April 2021 (2021-04-08) <br> description, page 7, line 10-page 30, line 37 | 1-34 |
| X | CN 111800830 A (HUAWEI TECHNOLOGIES CO., LTD.) 20 October 2020 (2020-10-20) <br> description, paragraphs 66-210 | 1-34 |
| X | ZTE CORP. et al. "Report from [Post113bis-e] [101] [NTN] cell reselection (ZTE)" <br> *3GPP TSG-RAN WG2 Meeting #114-e R2-2104805*, 27 May 2021 (2021-05-27), <br> sections 2-3 | 1-34 |
| X | LG ELECTRONICS INC. "Cell reselection based on time and location condition" <br> *3GPP TSG-RAN WG2 Meeting #114-e R2-2105786*, 27 May 2021 (2021-05-27), <br> sections 2-3 | 1-34 |
| A | US 2011143752 A1 (ELECTRONICS AND TELECOMMUNICATIONS RESEARCH INSTITUTE) 16 June 2011 (2011-06-16) <br> entire document | 1-34 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 February 2022** | **07 April 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/111088**

| Patent document cited in search report | | | Publication date (day/month/year) | Patent family member(s) | | | Publication date (day/month/year) |
|---|---|---|---|---|---|---|---|
| WO | 2021068151 | A1 | 15 April 2021 | None | | | |
| WO | 2021062599 | A1 | 08 April 2021 | None | | | |
| CN | 111800830 | A | 20 October 2020 | None | | | |
| US | 2011143752 | A1 | 16 June 2011 | KR | 20110068592 | A | 22 June 2011 |

Form PCT/ISA/210 (patent family annex) (January 2015)